# EUROPÄISCHE PATENTSCHRIFT

(11) **EP 3 643 689 B1**
(45) Veröffentlichungstag und Bekanntmachung des Hinweises auf die Patenterteilung: **01.10.2025**
(21) Anmeldenummer: 19204550.8
(22) Anmeldetag: 22.10.2019
(51) Int. Cl.: C03C 1/00, C03C 1/02, C03C 3/00

(54) **VERFAHREN ZUR HERSTELLUNG VON FARBIGEM GLAS SOWIE FARBIGES GLAS**
COLOURED GLASS AND METHOD FOR PRODUCING COLOURED GLASS AND
PROCÉDÉ DE FABRICATION DE VERRE COLORÉ AINSI QUE VERRE COLORÉ

(30) Priorität: 22.10.2018 DE 102018126135
(43) Veröffentlichungstag der Anmeldung: 29.04.2020
(73) Patentinhaber: BDG - Bundesverband der Deutschen Giesserei-Industrie e.V., 40549 Düsseldorf (DE)
(72) Erfinder: Franke, Matthias, 01468 Moritzburg (DE); Radtke, Elke, 41564 Kaarst (DE); Ulrich, Jorg, 01219 Dresden (DE)
(74) Vertreter: Gulde & Partner

(56) Entgegenhaltungen:
- DE-C1- 19 900 946
- US-A1- 2003 083 187

## Beschreibung

Die Erfindung betrifft ein Verfahren zur Herstellung von grünem und braunem Behälterglas.

Glas wird durch das Herstellen einer Glasschmelze aus Quarzsand erzielt. Quarzsand besteht fast ausschließlich aus Siliziumdioxid. Weitere Elemente können in Spuren vorhanden sein. Dem Ausgangsmaterial können verschiedene Bestandteile zugegeben werden, um die Gebrauchseigenschaften und Herstellungsbedingungen zu optimieren. Das aus den Ausgangsmaterialien bestehende Gemisch (Gemenge) wird in einem Ofen erschmolzen und anschließend einer Läuterung unterzogen. Die geläuterte Schmelze wird dann auf eine gewünschte Formgebungstemperatur abgekühlt.

Bei der Herstellung von farbigem Glas, beispielsweise braunem und grünem Behälterglas, wird der Farbton durch im Ausgangsgemisch vorhandene Verunreinigungen gebildet, die teilweise bewusst in Kauf genommen werden.

Auch ist bekannt, der Glasschmelze Altglas als Glasrecycling zuzugeben.

Ferner ist bekannt, dass in Gießereien zur Herstellung von Gussteilen geschmolzenes Metall in Formen aus Quarzsand gegossen wird. Der Sand wird für den Formenbau zuvor mit Bindemitteln unterschiedlichster Art, hauptsächlich Bentonit und organische Harze, verfestigt. Nach dem Einsatz der Form wird der Sand in der Regel aufbereitet und wiederverwendet. Er ist trotz der Aufbereitung mit Resten der Bindemittel verunreinigt. Ein Teil des Altsandes wird aus dem System ausgeschleust und durch neuen Sand ersetzt, um die Qualität der Sandmischung beibehalten zu können. Der ausgeschleuste Altsand wird zum größten Teil auf Deponien entsorgt.

EP 3 093 082 B1 offenbart ein Verfahren zur Aufbereitung und Wiederverwendung von Gießerei-Altsanden, wobei die Altsande einem mechanischen Aufschluss durch Zerkleinerung und anschließend einer Klassierung zugeführt werden. Hierzu wird der Gießerei-Altsand einer mehrstufigen Aufschlussmahlung unterzogen, wobei dieser mittels einer Hammermühle desagglomeriert und teilweise marginal mechanisch vom Binder getrennt wird sowie mittels einer Scheibenmühle weitgehend von seinen Binderhüllen befreit wird. Restliche Binderhüllen werden mittels einer Stiftmühle entfernt.

Der so aufgeschlossene Gießerei-Altsand wird anschließend einer Klassierung unterzogen, wobei sogenanntes Grobgut als Regenerat oder Rezyklat verwendet und sogenanntes Feingut deponiert wird.

DE 196 19 987 A1 offenbart ein physikalisches und chemisches Schotterglas, das aus dem Grundmaterial Glas und beigemischtem physikalischem Schotter gewonnen wird, wobei Gießerei-Formsandrückstände verwendet werden können.

Schließlich offenbart DE 199 00 946 C1 ein Verfahren zur stofflichen Verwertung von Altsanden. Die Altsande werden mechanisch und/oder pneumatisch aufbereitet und von Fremd- und Störstoffen gereinigt. In den Altsanden enthaltene Eisenteile werden magnetisch abgeschieden.

US 2003/083187 A1 offenbart ein Verfahren zur Erzeugung einer verglasten Schlacke aus diversen Abfällen und deren Einsatz als Strahlmaterial. Als ein möglicher Abfallbestandteil kann Altsand aus Gießereien eingesetzt werden.

Der Erfindung liegt die Aufgabe zugrunde, ein Verfahren zur Herstellung von grünem oder braunem Behälterglas zu schaffen, das ressourcenschonend durchgeführt werden kann.

Erfindungsgemäß wird diese Aufgabe durch ein Verfahren mit den in Anspruch 1 genannten Merkmalen gelöst. Dadurch, dass bei der Herstellung von grünem oder braunem Behälterglas aus einer Glasschmelze, die Glasschmelze durch einen Zusatz zwischen 20 und 50 Masseprozent von gereinigtem oder aufbereiteten Gießerei-Altsand an der mineralischen Gesamtmenge gewonnen wird, wobei eine chemische Analyse des gereinigten und aufbereiteten Gießerei-Altsandes durchgeführt wird und in Abhängigkeit dieser Analyse eine Anpassung der Gemengerezeptur der Glasschmelze erfolgt. Hierdurch kann einerseits der Einsatz von neuem Quarzsand reduziert werden und andererseits die Deponierung von Gießerei-Altsand vermindert werden. Beides führt dazu, dass natürliche Ressourcen geschont werden.

In erfindungsgemäßer Ausgestaltung ist vorgesehen, dass der so zur Verfügung gestellte aufbereitete Altsand hinsichtlich seiner chemischen und physikalischen Eigenschaften untersucht und bewertet wird und entsprechend eventuell noch vorhandener Verunreinigungen die übliche Gemengerezeptur zur Herstellung der Glasschmelze entsprechend angepasst wird. Hierdurch wird es vorteilhaft möglich, in flexibler Weise einfach auf unterschiedliche chemische und physikalische Zusammensetzungen der aufbereiteten Altsandmengen zu reagieren. Im Ergebnis kann dann ein farbiges Glas erhalten werden, das die für den gewünschten Einsatz notwendigen Eigenschaften besitzt. Insbesondere für die Herstellung von braunen und grünen Behältergläsern sind geringere Anforderungen an die Qualität erforderlich, so dass hier aufbereitete Gießerei-Altsande besonders bevorzugt eingesetzt werden können.

Erfindungsgemäß ist vorgesehen, dass bei der Herstellung von grünem und braunem Behälterglas der Anteil des Altsandes zwischen 20 und 50 Masse%, insbesondere zwischen 30 und 40 Masse% an dem mineralischen Gesamtgemenge beträgt.

In bevorzugter Ausgestaltung der Erfindung ist vorgesehen, dass der Gießerei-Altsand entsprechend den Anforderungen der Glasindustrie zur Herstellung von farbigem Glas aufbereitet wird. Hierzu ist bevorzugt vorgesehen, dass der Gießerei-Altsand zunächst von gröberen magnetischen Bestandteilen befreit wird. Anschließend wird der von den gröberen magnetischen Bestandteilen befreite Altsand mechanisch zerkleinert, so dass vorhandene Knollen und grobe Körner mit einer geringeren Korngröße vorliegen. Hieraus verbleibende Grobfraktionen, beispielsweise größer als 0,5 mm, können ausgeschieden, insbesondere abgesiebt werden und nach nochmaliger Zerkleinerung dem Gießerei-Altsand wieder zugeführt werden.

Der Gießerei-Altsand wird anschließend vorzugsweise einem Attritionsverfahren, also einer intensiven Abrasion mittels mechanischer Mischvorrichtungen unterzogen. Hierdurch werden vorteilhaft Altsandkornhüllen, die insbesondere aus Bentonit, Harzen, Kohlenstoff und anderen im Altsand vorhandenen Verunreinigungen bestehen, abgetrennt.

Anschließend wird in weiterhin bevorzugter Ausgestaltung vorgesehen, dass das nunmehr vorhandene Gießerei-Altsandgemisch von vorhandenen Feinanteilen, beispielsweise kleiner als 0,1 mm, befreit wird. Diese Aussonderung kann beispielsweise durch Absieben oder durch Ausblasen erfolgen. Diese ausgesonderten Feinanteile beinhalten den Hauptteil der zuvor im Attritionsverfahren abgetrennten Kornhüllen.

In weiterer bevorzugter Ausgestaltung ist anschließend eine magnetische Feinreinigung vorgesehen, bei der gegebenenfalls in mehreren Zyklen noch vorhandene magnetische Stoffe abgetrennt werden. Dies kann durch geeignete magnetische Abtrenngeräte, beispielsweise durch Magnetstäbe aufweisende Magnetabscheider, die von dem Altsand passiert werden, erfolgen. Die abgeschiedenen metallischen Stoffströme können einer metallurgischen Verwertung zugeführt werden.

In einer weiteren bevorzugten Ausgestaltung ist vorgesehen, dass die aus mehreren unterschiedlichen Chargen gewonnenen aufbereiteten Gießerei-Altsande gemischt werden, so dass größere Mengen mit homogenen chemischen und physikalischen Eigenschaften zur Verfügung stehen.

Insgesamt bietet das erfindungsgemäße Verfahren den Vorteil, dass die natürlich vorhandene mineralische Ressource Sand geschont werden kann. Der Gießerei-Altsand kann im Stoffkreislauf gehalten werden bei gleichzeitiger Minimierung des Sandverbrauches (Quarzsand) für die Glasherstellung. Darüber hinaus können Entsorgungs- und Deponiekosten für den Gießerei-Altsand zumindest deutlich reduziert werden.

Die Glasindustrie kann ihre Rohstoffkosten durch den Einsatz von Gießerei-Altsand senken, da der Einsatz von neuem Quarzsand und von Glasscherben optimiert und gegebenenfalls reduziert werden kann.

Die Erfindung wird nachfolgend in einem Ausführungsbeispiel anhand der zugehörigen Zeichnung, die ein Blockschaltbild für den Stoffkreislauf zeigt, erläutert.

In einem ersten Schritt 10 wird ungereinigter Gießerei-Altsand bereitgestellt. Je nach Gießereieinsatz weist dieser eine unterschiedliche chemische Zusammensetzung auf. Hierbei sind Anteile von Aluminiumoxid Al₂O₃, Eisenoxid Fe₂O₃ sowie Kohlenstoff C enthalten. Durch die Zugabe von Bindemitteln und Reduktionsmitteln während des Einsatzes in der Gießerei bilden sich Kornhüllen um die einzelnen Kornbestandteile des Gießereisandes, die insbesondere Bentonit, Harz, Kohlenstoff und andere Materialien enthalten.

Gießerei-Altsand weist auch eine unterschiedliche Korngrößenverteilung und sogenannte Knollen auf, die einen Einsatz des Gießerei-Altsandes im Rohzustand für die Herstellung von farbigem Glas ungeeignet machen.

In einem weiteren Schritt 12 werden aus einem Gießerei-Altsand-Gutstrom magnetische Bestandteile ausgesondert. Hierzu wird der Gießerei-Altsand durch einen Magnetabscheider geführt, um so die im Gießerei-Altsand vorhandenen autarken größeren magnetischen Bestandteile auszusondern. Gegebenenfalls kann der Durchlauf des Gießerei-Altsandes durch den Magnetabscheider wiederholt werden, um die Reinigungswirkung zu erhöhen. Beim nächsten Schritt 14 wird der so von den groben magnetischen Bestandteilen gereinigte Gießerei-Altsand zerkleinert. Hierzu wird der Gießerei-Altsand über einen Zerkleinerer, beispielsweise eine Walze, geführt, so dass Knollen und größere Körner (≥ 5 mm) aufgebrochen werden und anschließend in einer geringeren Korngröße vorliegen.

In einem nächsten Schritt 16 wird der Gießerei-Altsand gesiebt, so dass eine Grobfraktion mit einer Korngröße >0,5 mm ausgesondert wird. Diese Grobfraktion kann in einem Schritt 18 nochmals zerkleinert werden auf eine Korngröße ≤0,5 mm und dem Altsand-Gutstrom wieder zugeführt werden. In einem nächsten Schritt 20 wird dann eine Attrition durchgeführt. Das heißt, Kornhüllen des Gießerei-Altsandes werden durch Reibung, beispielsweise Mischung mittels eines Paddelmischers, mechanisch von dem Korn getrennt. Hierbei werden beispielsweise Kornhüllen aus Bentonit, Harz, Kohlenstoff und anderen Materialien aufgebrochen.

In einem nächsten Schritt 22 werden aus dem Gießerei-Altsand-Gutstrom Feinanteile <0,1 mm ausgesondert. Dies kann beispielsweise durch eine Luft-Fluidisierung mit einer angeschlossenen Entstaubung erfolgen.

In einem weiteren Schritt 24 wird der verbliebene Gießerei-Altsand-Gutstrom einer magnetischen Feinreinigung unterzogen. Mittels einer oder gegebenenfalls mehrerer magnetischer Abtrenngeräte und gegebenenfalls auch in mehreren Zyklen, werden jetzt noch vorhandene magnetische Reststoffe abgetrennt. Insbesondere durch das Attritionsverfahren können magnetische Bestandteile freigesetzt werden sein, die bei der ersten magnetischen Grobreinigung noch nicht entfernt werden konnten.

Die abgetrennten metallischen Stoffe können in einem Schritt 26 einer metallurgischen Verwertung zugeführt werden.

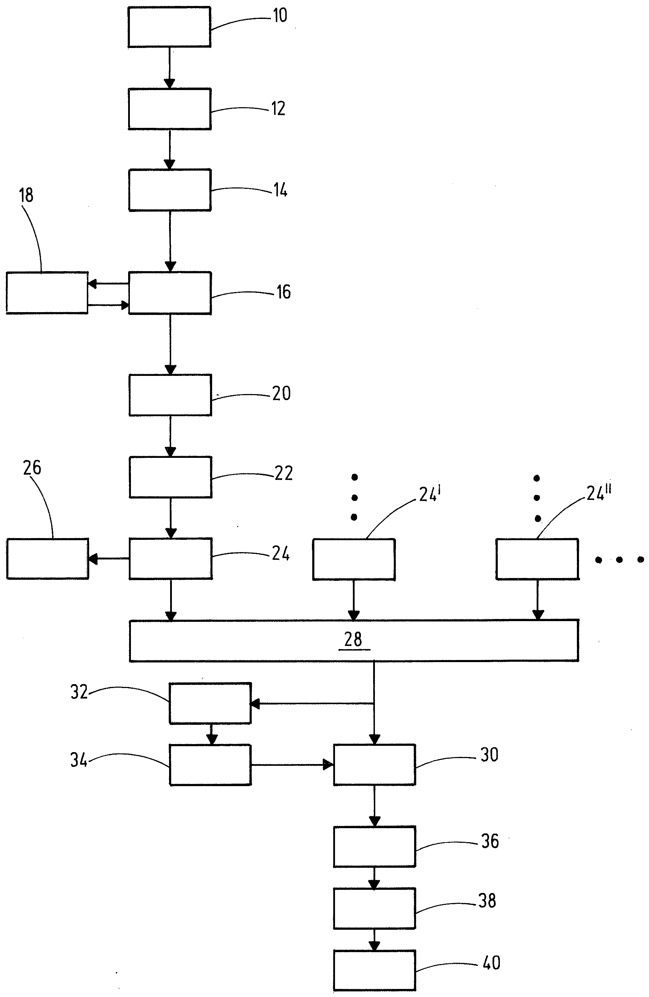

In einem nächsten Schritt 28 wird der gereinigte und von magnetischen Reststoffen getrennte Gießerei-Altsand-Gutstrom einer Mischstation zugeführt. Hierbei können - wie in der Figur mit den Schritten 24' und 24" angedeuteten Zweigen - die aufbereiteten und gereinigten Gießerei-Altsande aus mehreren Chargen miteinander vermischt werden. Da jeder Gießerei-Altsand spezifische, chemische und physikalische Eigenschaften aufweist, kann so durch eine Vermischung von gereinigten Gießerei-Altsanden aus unterschiedlichen Chargen eine einheitliche chemische und physikalische Zusammensetzung des für die Glasherstellung zur Verfügung stehenden Gießerei-Altsandes erreicht werden.

Der so bereitgestellte Gießerei-Altsand kann nach Lagerung und Transport in einem Schritt 30 in der Glasindustrie anteilig in einer Glasschmelze zur Herstellung von farbigem Glas, insbesondere farbigem Behälterglas, insbesondere Grün- oder Braunbehälterglas, eingesetzt werden.

Vor dem Einsatz in der Glasschmelze wird der bereitgestellte Gießerei-Altsand einer chemischen Analyse auf seine Anteile, insbesondere verbliebenen Verunreinigungen, untersucht. Dies ist hier durch den Schritt 32 angedeutet.

Entsprechend der sich im Schritt 32 ergebenden Ergebnisse wird in einem Schritt 34 eine Anpassung der Gemengerezeptur der Glasschmelze durchgeführt. Entsprechend der chemischen und physikalischen Zusammensetzung des Gießerei-Altsandes wird auch der prozentuale Anteil des Gießerei-Altsandes an der Gesamtglasschmelze bestimmt.

Die im Schritt 30 erzeugte Glasschmelze wird dann in einem Schritt 36 in an sich bekannter Weise geläutert und in einem Schritt 38 abgekühlt und in einem Schritt 40 einer Formgebung zugeführt.

Anhand des Ablaufschemas wird deutlich, dass durch entsprechende Aufbereitung von Gießerei-Altsanden ein Rohstoff für die Glasindustrie zur Herstellung von farbigem Glas, insbesondere farbigem Behälterglas, bereitgestellt werden kann.

Im Schritt 34 kann dann beispielsweise auch die gezielte Zugabe von Oxidations- oder Reduktionsmitteln in Abhängigkeit der Zusammensetzung des Gießerei-Altsandes festgelegt werden. Hierdurch kann auf die veränderten Reduktions- und Oxidationsbedingungen in der Glasschmelze infolge der Verwendung des gereinigten Gießerei-Altsandes eingegangen und diese ausgeglichen werden.

Nachfolgend werden konkrete Ausführungsbeispiele benannt, die die Zusammensetzung der Altsände in ausgewählten Verfahrensschritten verdeutlichen:

**Tabelle 1: Charakteristik zweier beispielhafter Altsande vor der Reinigung (Schritt 10)**

| Altsand original Nr. | Al₂O₃ (%) | Cr₂O₃ (%) | Fe₂O₃ (%) | Kohlenstoff (%) | Anteil Partikel ≤ 0,1 mm (%) | Anteil Partikel ≥ 0,5 mm (%) |
|---|---|---|---|---|---|---|
| A | 1,38 | 0,029 | 0,46 | 0,57 | 1,5 | 5,8 |
| B | 0,70 | 0,001 | 0,82 | 1,63 | 2,5 | 12,9 |

**Tabelle 2: Charakteristik zweier beispielhafter Altsande nach der Reinigung (Schritt 24)**

| Altsand aufbereitet Nr. | Al₂O₃ (%) | Cr₂O₃ (%) | Fe₂O₃ (%) | Kohlenstoff (%) | Anteil Partikel ≤ 0,1 mm (%) | Anteil Partikel ≥ 0,5 mm (%) |
|---|---|---|---|---|---|---|
| A | 0,83 | 0,002 | 0,22 | 0,45 | 0,1 | 0,1 |
| B | 0,13 | 0,001 | 0,38 | 0,95 | 0,1 | 0,1 |

**Tabelle 3: Charakteristik des Mischsandes aus gereinigten Altsanden (Schritt 28)**

| Altsand aufbereitet Mischung | Al₂O₃ (%) | Cr₂O₃ (%) | Fe₂O₃ (%) | Kohlenstoff (%) | Anteil Partikel ≤ 0,1 mm (%) | Anteil Partikel ≥ 0,5 mm (%) |
|---|---|---|---|---|---|---|
| A+B | 0,48 | 0,002 | 0,30 | 0,70 | 0,1 | 0,1 |

## Patentansprüche

1. Verfahren zur Herstellung von grünem oder braunem Behälterglas aus einer Glasschmelze,
**dadurch gekennzeichnet, dass** die Glasschmelze durch einen Zusatz zwischen 20 und 50 Masseprozent von gereinigtem und aufbereitetem Gießerei-Altsand an der mineralischen Gesamtmenge zur Herstellung der Glasschmelze gewonnen wird, wobei eine chemische Analyse des gereinigten und aufbereiteten Gießerei-Altsandes durchgeführt wird und in Abhängigkeit dieser Analyse eine Anpassung der Gemengerezeptur der Glasschmelze erfolgt.

2. Verfahren nach Anspruch 1, **dadurch gekennzeichnet, dass** aus dem Gießerei-Altsand autarke magnetische Bestandteile ausgesondert werden.

3. Verfahren nach einem der vorhergehenden Ansprüche, **dadurch gekennzeichnet, dass** der Gießerei-Altsand zerkleinert wird um Knollen und größere Körner aufzubrechen.

4. Verfahren nach einem der vorhergehenden Ansprüche, **dadurch gekennzeichnet, dass** der Gießerei-Altsand gesiebt und eine Grobfraktion mit einer Korngröße > 0,5 mm ausgesondert wird.

5. Verfahren nach Anspruch 4, **dadurch gekennzeichnet, dass** die Grobfraktion auf eine Korngröße ≤ 0,5 mm zerkleinert wird und dem Gießerei-Altsand wieder zugeführt wird.

6. Verfahren nach einem der vorhergehenden Ansprüche, **dadurch gekennzeichnet, dass** der Gießerei-Altsand einer Attrition unterzogen wird.

7. Verfahren nach einem der vorhergehenden Ansprüche, **dadurch gekennzeichnet, dass** aus dem Gießerei-Altsand Feinanteile < 0,1 mm ausgesondert werden.

8. Verfahren nach einem der vorhergehenden Ansprüche, **dadurch gekennzeichnet, dass** der Gießerei-Altsand einer magnetischen Feinreinigung unterzogen wird.

9. Verfahren nach einem der vorhergehenden Ansprüche, **dadurch gekennzeichnet, dass** der gereinigte und aufbereitete Gießerei-Altsand aus mehreren Chargen miteinander vermischt wird.

## Claims

1. A method for producing green or brown container gas from a glass melt,
**characterized in that** the glass melt is obtained by adding between 20 and 50 wt.% of cleaned and processed used foundry sand to the total mineral amount used to produce the glass melt, wherein a chemical analysis of the cleaned and processed used foundry sand is carried out and the composition of the glass melt is adjusted according to this analysis.

2. The method according to Claim 1, **characterized in that** autonomous magnetic components are separated from the used foundry sand.

3. The method according to any one of the preceding claims, **characterized in that** the used foundry sand is crushed to break up lumps and larger grains.

4. The method according to any one of the preceding claims, **characterized in that** the used foundry sand is sieved and a coarse fraction with a grain size > 0.5 mm is separated out.

5. The method according to Claim 4, **characterized in that** the coarse fraction is crushed to a grain size ≤ 0.5 mm and returned to the used foundry sand.

6. The method according to any one of the preceding claims, **characterized in that** the used foundry sand is subjected to attrition.

7. The method according to any one of the preceding claims, **characterized in that** fine particles < 0.1 mm are separated from the used foundry sand.

8. The method according to any one of the preceding claims, **characterized in that** the used foundry sand is subjected to magnetic fine cleaning.

9. The method according to any one of the preceding claims, **characterized in that** the cleaned and processed used foundry sand from several batches is mixed together.

## Revendications

1. Procédé de fabrication de verre de récipient vert ou brun à partir d'une masse fondue de verre, **caractérisé en ce que** la masse fondue de verre est obtenue par une addition d'entre 20 et 50 pour cent en masse de sable de fonderie usagé purifié et préparé à la quantité minérale totale pour la fabrication de la masse fondue de verre, une analyse chimique du sable de fonderie usagé purifié et préparé étant réalisée et une adaptation de la formulation de la masse fondue de verre étant effectuée en fonction de cette analyse.

2. Procédé selon la revendication 1, **caractérisé en ce que** des constituants magnétiques autarciques sont séparés du sable de fonderie usagé.

3. Procédé selon l'une quelconque des revendications précédentes, **caractérisé en ce que** le sable de fonderie usagé est broyé pour briser les nodules et les grains plus gros.

4. Procédé selon l'une quelconque des revendications précédentes, **caractérisé en ce que** le sable de fonderie usagé est tamisé et une fraction grossière d'une granulométrie > 0,5 mm est séparée.

5. Procédé selon la revendication 4, **caractérisé en ce que** la fraction grossière est broyée à une granulométrie ≤ 0,5 mm et est réintroduite dans le sable de fonderie usagé.

6. Procédé selon l'une quelconque des revendications précédentes, **caractérisé en ce que** le sable de fonderie usagé est soumis à une attrition.

7. Procédé selon l'une quelconque des revendications précédentes, **caractérisé en ce que** les fines < 0,1 mm sont séparées du sable de fonderie usagé.

8. Procédé selon l'une quelconque des revendications précédentes, **caractérisé en ce que** le sable de fonderie usagé est soumis à une purification fine magnétique.

9. Procédé selon l'une quelconque des revendications précédentes, **caractérisé en ce que** le sable de fonderie usagé purifié et préparé est mélangé à partir de plusieurs lots.
